# EUROPEAN PATENT SPECIFICATION

(11) **EP 4 620 153 B1**
(45) Date of publication and mention of the grant of the patent: **20.05.2026**
(21) Application number: 22814439.0
(22) Date of filing: 14.11.2022
(51) Int. Cl.: H04L 9/40, H04L 9/32

(54) **VALIDATING DELEGATED CONSENT**
VALIDIERUNG EINER DELEGIERTEN ZUSTIMMUNG
VALIDATION DE CONSENTEMENT DÉLÉGUÉ

(43) Date of publication of application: 24.09.2025
(73) Proprietor: Telefonaktiebolaget LM Ericsson (publ), 164 83 Stockholm (SE); ERICSSON AB, 164 80 Stockholm (SE)
(72) Inventor: RAGHAVAN, Ajit, New Delhi 110019 (IN); LIOKUMOVICH, Gregory, 61440 Oberursel (DE); SRIVASTAVA, Nikhil, 371 31 Karlskrona (SE)
(74) Representative: Ericsson
(86) International application number: PCT/EP2022/081715
(87) International publication number: WO 2024/104547

(56) References cited:
- US-A1- 2020 034 553
- US-A1- 2020 313 852
- US-B1- 10 887 301

## Description

### TECHNICAL FIELD

The present disclosure relates to a method of validating delegated consent and a node performing the method. A computer program and a computer program product is further provided.

### BACKGROUND

In today's communication networks, and in particular in 5^{th} generation (5G) networks, communication service providers (CSPs) target enterprise markets by offering network/system capabilities exposed via application programmable interfaces (APIs). This is to enable the enterprises to make use of the CSP's network capabilities to build applications services or for self-management purposes.

For enterprises or partners with global presence, the applications or services need to be integrated with multiple CSPs where each CSP might have a different API mechanism for exposing their network capabilities. This presents a challenge for these enterprises who likely would rather prefer to integrate their application against a single API giving access to all CSPs in the regions they are operating in. This problem is usually solved by using intermediaries like API aggregators who hide the technical complexities of CSP APIs and expose a simplified CSP neutral API to the enterprises.

There can be multiple levels of aggregators ranging from regional level to country level to global level. Enterprises with global presence might be signing up with a global aggregator who internally may be using various country and/or regional aggregators to connect to CSPs. As enterprises typically own their resources being maintained by CSPs, a CSP must ensure that an application accessing them via APIs has corresponding consent from the enterprise as a resource owner. An API call from an enterprise application passes through a chain of aggregators before the target CSP is reached and an enterprise may not even be aware of any intermediaries involved in the chain and may not have given its consent to the intermediaries acting on behalf of the enterprise, such as for instance handling enterprise subscriptions.

US 10 887 301 B1, US 2020/313852 Al, and US 2020/034553 A1, relate to methods for providing consent to access information.

### SUMMARY

One objective is to solve, or at least mitigate, this problem in the art and to provide a method of validating delegated consent.

This objective is attained in a first aspect by a method of validating delegated consent in a chain of nodes comprising a first node, a plurality of intermediate nodes and a validating node, the first node being configured to delegate consent to perform an action on behalf of the first node to a last node of the plurality of intermediate nodes, which delegated consent is validated by the validating node in the chain following the last intermediate node for the delegation of consent to the last intermediate node to be allowed. The method comprises receiving, at the validating node from the last intermediate node, a digitally signed message of each preceding node sent to an immediately following node in the chain, and validating, at the validating node, each provided digital signature by utilizing a preregistered public key of each node and that the indication of each node that an immediately following node in the chain is given consent to perform said action has been preregistered, wherein the delegation of consent along the chain to the last intermediate node to perform said action is allowed.

This objective is attained in a second aspect by a validating node configured to validate delegated consent in a chain of nodes comprising a first node, a plurality of intermediate nodes and the validating node, the first node being configured to delegate consent to perform an action on behalf of the first node to a last node of the plurality of intermediate nodes, which delegated consent is validated by the validating node in the chain following the last intermediate node for the delegation of consent to the last intermediate node to be allowed. The validating node comprises a processing unit and a memory, said memory containing instructions executable by said processing unit, whereby the validating node is operative to receive, from the last intermediate node, a digitally signed message of each preceding node sent to an immediately following node in the chain, and to validate each provided digital signature by utilizing a preregistered public key of each node and that the indication of each node that an immediately following node in the chain is given consent to perform said action has been preregistered, wherein the delegation of consent along the chain to the last intermediate node to perform said action is allowed.

Advantageously, a validating node validates that a request to perform an action on behalf of another node in a chain of nodes is being made with valid a signature being included for each node, where not all of the nodes may be aware of each other.

Further advantageous, before any delegation of consent to perform an action on behalf of another node may occur, each node will register an indication that a subsequent node in the chain can be trusted on its behalf. Thereby, a consent chain will advantageously be established starting at a first node in the chain and ending at a last node. Along with the indication that a subsequent node can be trusted, each node will register its public key for signature validation.

In an embodiment, a separate digitally signed message is received for each node.

In an embodiment, a sequence of digitally signed messages is received , wherein to each signed message an immediately following node has provided its digital signature.

In an embodiment, the validation comprises processing each digital signature with a public key corresponding to a private key utilized to apply the digital signature.

In an embodiment, the digitally signed message of each node comprises a generated one-time number, wherein the validation further comprises verifying that the received one-time number of each node has not been previously used in a signed message of said each node.

In an embodiment, each received one-time number is stored.

In an embodiment, a public key and the consent given to the immediately following node is registered for each preceding node.

In an embodiment, a public key is registered for the last intermediate node.

In an embodiment, a received digital signature of the last intermediate node is validated utilizing its registered public key.

In an embodiment, the receiving further comprising receiving a digitally signed one-time number of said last intermediate node wherein the validating further comprises verifying that the received one-time number of said last intermediate node has not been previously used in a signed message of said last intermediate node.

In a third aspect, a computer program is provided comprising computer-executable instructions for causing a validating node to perform steps recited in the method of the first aspect when the computer-executable instructions are executed on a processing unit included in the validating node.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 illustrates a prior art consent handling procedure;
Figure 2 illustrates a prior art consent handling procedure including multiple intermediate nodes;
Figure 3 illustrates a consent validation mechanism according to an embodiment;
Figure 4 illustrates a consent validation mechanism according to another embodiment;
Figure 5 illustrates a consent validation mechanism according to a further embodiment;
Figure 6 illustrates a consent validation mechanism including registration according to an embodiment; and
Figure 7 illustrates a consent validating node according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

Currently available technologies are not suitable for handling user consent, or as in the following examples: enterprise consent, in scenarios involving multiple intermediary nodes (i.e., API aggregators) in an API invocation chain.

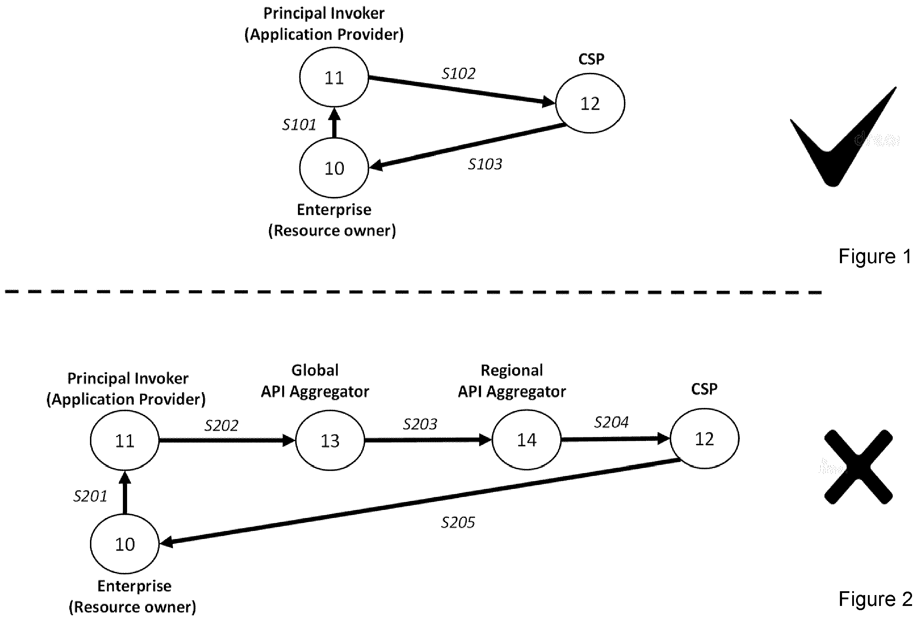

Figure 1 illustrates an enterprise consent handling procedure in a standard Open Authorization (OAUTH) protocol, where it is possible to have an enterprise 10 provide access consent directly in step S101 to an application 11 which the enterprise 10 uses. For instance, the enterprise 10 may allow the application 11 to perform an action such as managing a subscription on behalf of the enterprise 10, e.g. performing changes to the subscription (within specified limits).

The application 11 will thus in step S102 make an API call to communication service provider (CSP) 12, thereby making a request to the CSP 12 to manage the subscription on behalf of the enterprise 10.

In step S103, the CSP 12 will confirm with the enterprise 10 that the application 11 indeed is allowed the manage the subscription, to which the enterprise 10 will reply in the positive. In other words, delegation of consent to perform the action of managing the subscription on behalf of the enterprise 10 has successfully been given to the application 11 and the CSP 12 will allow the application 11 to manage the subscription resources of the enterprise 10.

Figure 2 illustrates that this consent delegation mechanism fails when there are multiple entities or nodes (i.e., aggregators) involved in the API invocation chain and the API call to the CSP 12 ultimately is made by a last aggregator 14 in the aggregator invocation chain.

Hence, the enterprise 10 provides access consent directly in step S201 to first application 11. Again, the enterprise 10 may allow the first application 11 to manage a resource such as a subscription on behalf of the enterprise 10.

The first application 11 will in its turn provide access consent to a global API aggregator, i.e. second application 13, in step S202 to handle the subscription on behalf of the enterprise 10 by making an API call to the second application 13.

Thereafter, the second application 13 provides access consent to a regional API aggregator, i.e. third application 14, in step S203 to handle the subscription on behalf of the enterprise 10, again by making an API call.

Finally, the third application 14 makes an API call to the CSP 12 in step S204, thereby making a request to the CSP 12 to manage the subscription of the enterprise 10 on behalf of the enterprise 10 (via the first application 11 and the second application 13).

However, in this scenario, the CSP 12 will - upon checking with the enterprise 10 in step S205 whether or not the third application 14 is allowed to the manage the subscription - receive a negative response, since the enterprise 10 has not given consent to the third application 14 but only to the first application 11 (and may in fact be unfamiliar with the third application 14). Thus, delegation of consent to the third application 14 to manage resources on behalf of the enterprise 10 fails.

In other words, since the third application 14 - being the last intermediate entity or node in the chain between the enterprise 10 and the CSP 12 - has not been given consent to act on behalf of the enterprise 10, the CSP 12 cannot allow the third application 14 access to the enterprise resources (e.g., network slices, subscriptions in business support systems (BSS) systems etc.) even though the intermediate applications 11, 13 and 14 are invoking the API indirectly on behalf of the enterprise 10. With the stringent regulations related to data access and privacy, e.g. general data protection regulation (GDPR) regulations, CSPs will be reluctant to expose enterprise data to a 3rd party without any explicit consent/access grant from the enterprise.

As is understood, while the managing of resources in examples throughout this application is exemplified in the form of managing of subscriptions, any appropriate resource may be envisaged, such as e.g. network slices in a 5G system, device configurations, locations, etc.

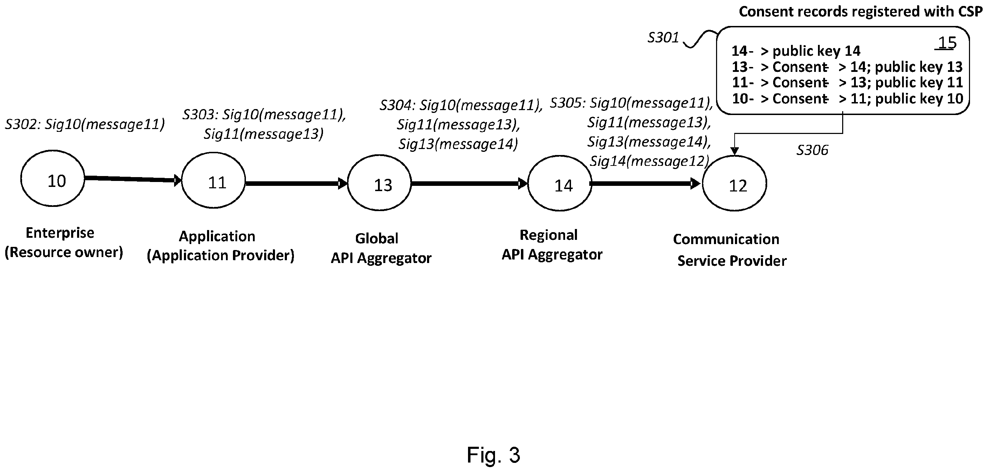

Figure 3 illustrates a consent validation mechanism according to an embodiment for resolving this issue.

Since there are multiple nodes 10-14 involved at different branches in the API invocation chain, the embodiment proposes a consent chain which establishes a trust relationship at each branch of chain. As is understood, illustrated in this example embodiment is an API invocation chain, but the embodiments disclosed herein may be applied to any similar chain of nodes where consent is passed on from one node to a subsequent node until a consent manager (in this case the CSP 12) is to approve the delegated consent.

Before any delegation of consent to manage resources on behalf of another node may occur, each node will register an indication that a subsequent node in the chain can be trusted on its behalf. Thereby, a consent chain will advantageously be established starting at the enterprise 10 and ending at the CSP 12.

Along with the indication that a subsequent node can be trusted, each node will register its public key for signature validation as will be discussed in the following.

Thus, in step S301, each node in the chain is registered at the CSP 12 in registration storage 15; the enterprise 10 registers an indication that first application 11 can be trusted along with the public key of the enterprise 10, the first application 11 registers an indication that the second application 13 can be trusted along with the public key of the first application 11, and so on, until all nodes have been registered with the CSP 12 in step S301. As is understood, the third application 14 does strictly not need to register its public key since the third application 14 is the last intermediate node in the chain before the CSP 12, the CSP 12 being the consent validating. Ultimately, as will be described in detail, the public keys are used at the CSP 12 for subsequently validating digital signatures as a mechanism for each node to prove being involved in an API transaction occurring through the chain. Providing the digital signature of the third application 14 (and thus its public key) is thus not mandatory since the third application 14 are making a direct request to the CSP 12, and the CSP 12 could deny the third application 14 any access, if desired. Nevertheless, as an added security feature, the third application 14 may perform public key registration in step S301, even though such registration is optional.

Similar to Figures 1 and 2, the enterprise 10 sends a message directly in step S302 to the first application 11 e.g. allowing the first application 11 to perform an action such as managing a resource in the form of a subscription on behalf of the enterprise 10.

However, in contrast to what was described with reference to Figures 1 and 2, the enterprise 10 will provide the message sent to the first application 11 with a digital signature for the consent validating node - i.e. the CSP 12 - to subsequently validate. Thus, the enterprise 10 will use its private key to supply the message in step S302 to the first application 11 with a digital signature, denoted Sig10(message11). As is understood, any message/data could be signed before being sent along in the chain, since it is the digital signature that ultimately will be validated by the CSP 12 along with the preregistration made in step S301 and held in the registration storage 15 indicating that the immediately preceding node - i.e. the first application 11 in the case of the enterprise 10 - indeed is trusted. In this exemplifying embodiment, Sig10(message11) simply indicates a message being digitally signed by the enterprise 10 and sent to the first application 11.

In practice, the digital signature is applied by processing the message "message11" with the private key, while subsequent verification of the signature is performed by correspondingly processing the signed message Sig10(constent11) with the public key corresponding to the private key.

During the API Invocation being performed, the message "message11" is commonly known as an API invocation context object and may be passed along in a Hypertext Transfer Protocol (HTTP) header, or alternatively in the form of payload data.

The first application 11 will in its turn provide a digitally signed message denoted Sig11(message13) to a global API aggregator, i.e. the second application 13, in step S303 along with the previously received signed message Sig10(message11).

Thereafter, the second application 13 provides a digitally signed message Sig13(message14) to a regional API aggregator, i.e. the third application 14, in step S304 along with the previously received signed messages Sig10(message11) and Sig11(message13).

Finally, the third application 14 makes an API call to the CSP 12 in step S305 thereby making a request to the CSP 12 to manage the subscription of the enterprise 10 on behalf of the enterprise 10 (via the first application 11 and the second application 13). As previously discussed, the third application 14 is not strictly required to provide a digital signature Sig14 using its private key, being the last of the intermediate nodes in the chain before the CSP 12.

Upon receiving all signed messages Sigi10(message11), Sig11(message13), Sig13(message14) and optionally Sig14(message12), the CSP 12 will use the public key registered in step S301 for each node to validate the provided digital signatures in step S306. Thus, the CSP 12 will use the public key of the enterprise 10 to validate the signature of Sigio(message11) and conclude that the enterprise 10 has delegated the consent to the first application 11 as indicated with the preregistration at the CSP 12 in step S301. In other words, the validation of the digital signature of the enterprise 10 at the CSP 12 along with the preregistered consent held in the registration storage 15 that the first application 11 indeed is allowed to perform an action on behalf of the enterprise 10 provides for a successful delegation of consent from the enterprise 10 to the first application 11. As will be shown, the consent will ultimately be delegated to the last intermediate node in the chain, i.e. the third application 14.

This is performed by the CSP 12 in step S306 for each node in the chain and if all signatures Sig10, Sig11, Sig13 and (optionally) Sig14 are valid and consent is indicated for each node as confirmed by verifying that consent preregistration of each node 10, 11, 13 indeed was performed in step S301 for each following node 11, 13 and 14, respectively, API invocation is allowed and the delegation of access consent for the enterprise 10 via first and second applications 11, 13 to the third application 14 is successful, as ultimately determined by the CSP 12 in step S306.

Advantageously, this embodiment enables the CSP 12 to validate that the API invocation (i.e. request to perform an action on behalf of the enterprise 10) is being made with valid signature being included for each node, where not all of the nodes may be aware of each other.

Further advantageous is that the validation at the CSP 12 does not depend on the authentication and authorization performed between any to nodes in the chain.

A potentially malicious node in the chain cannot modify the API invocation context object (for example remove a digital signature) since that will result in signature invalidation.

Further, if one of the nodes has not preregistered with the registration storage 15 of the CSP that the node indeed trusts the immediately following node in the chain, consent invalidation occurs and no consent is given to the last intermediate node 14 to act on behalf of the first node 10 in the chain.

Thus, with the proposed solution, a consent chain is established where each next-hop node in the chain requires an explicit consent from the immediately preceding node for allowing the next-hop node to act on behalf of the preceding node. The registered consent given by each node to the immediately following node in the chain along with the public key of each node in the chain is utilized by the CSP 12 to validate the digital signatures and authorize the API invocation chain, in order to allow access to the resources hosted by the CSP 12.

The solution is based on delegated trust where one node trusts another node to act on its behalf, wherein that other node trusts some other node to act on their behalf, and so on. Legally, these trusts may be realized in the form of contracts between the corresponding companies (for example, a contract between "B" and "D" allows "D" to act on behalf of "B" under described circumstances). Technically, all these trusts are captured via an explicit consent being registered with the CSP 12.

As described in Figure 3, during the API invocation, each node has to digitally sign a transaction and may append that signature in the API invocation context. When the API invocation passes through the chain, there will be signatures from each node in the chain appended to the API invocation context which proves that nodes are involved in the API invocation chain.

The CSP 12 ultimately uses the sequence of the transaction signatures included in the API context to validate that the API invocation chain included the nodes whose signatures are included in the API invocation context. In a next step, the CSP 12 checks in its registration storage 15 if there is a valid consent already registered for each two consecutive nodes in the chain. If all the signatures are valid and each two consecutive nodes in the API invocation chain has a corresponding valid consent already registered with the CSP 12, the CSP 12 will allow the API invocation to go through (provided all other authorization policy requirements are met).

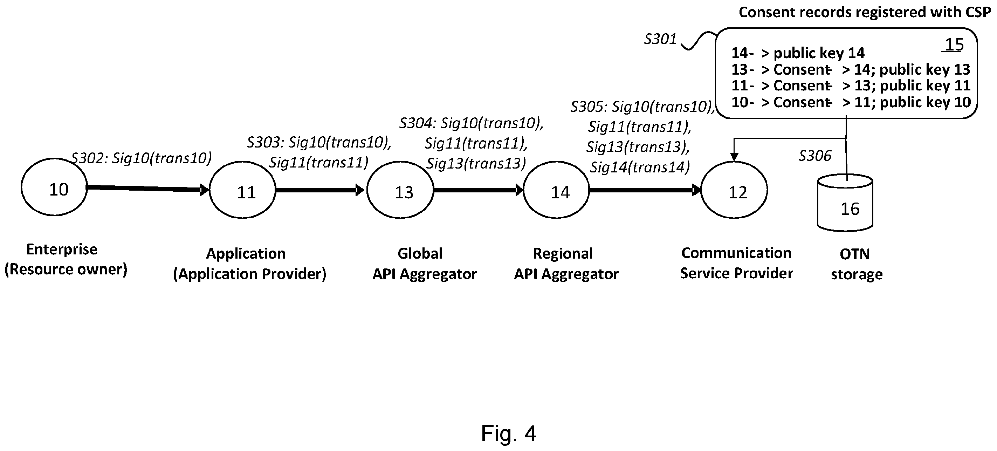

Figure 4 illustrates an embodiment where a higher level of security is provided. In this embodiment, the message being digitally signed at each node before being sent to the immediately following node comprises a unique transaction number to hamper e.g. a replay attack where a malicious node would eavesdrop on the messages being sent between the nodes in order to fetch one or more messages and malicious replay a fetched message which potentially could have the CSP 12 erroneously validate the replayed message(a).

Thus, rather than digitally signing any message and sending the signed message to the first application 11, the enterprise will in step S302 digitally sign a unique transaction number (denoted *trans10* in Figure 4), for instance a random number generated by utilizing a random number generator and send the signed number Sig10(trans10) to the first application in step S302. This will in the following be referred to as a one-time number (OTN) and will subsequently be verified by the CSP 12 as described hereinbelow.

Thereafter, the first application 11 in its turn generates a one-time number trans11 and signs the generated number, resulting in Sig11(trans 11) and sends the signed number Sig11(trans11) along with the received signed number Sig10(trans10) to the second application 13 in step S303.

This process is performed at each node until the CSP 12 receives signed numbers from each node in the chain in step S305: Sig10(trans10), Sig11(trans11), Sig13(trans13) and Sig14(trans14). Again, receiving a signed one-time number Sig14(trans14) from the last intermediate node in the chain - i.e. the third application 14 - is optional.

As in the embodiment of Figure 3, the CSP 12 will in step S306 validate each signature being provided using the public key of each node preregistered in step S301 and held in registration storage 15, and further conclude that each node indeed has preregistered an indication of consent for the immediately following node.

However, in addition to the embodiment described with reference to Figure 3, the CSP 12 will further verify that the one-time number signed at each node has not been previously used for that particular node. In other words, the CSP 12 will maintain a one-time number store 16 where each previously used one-time number is stored. Thus, the CSP 12 verifies in step S306 whether or not the one-time number trans10 has been used for the enterprise 10, and if not, the validation is successful. If the number to the contrary has been previously used for the enterprise 10, the CSP 12 will not allow the delegation of consent being requested.

This will be performed for each received one-time number trans10, trans11, trans13 and optionally trans14 in step S306. If any of the one-time number of each node have been used before for that particular node, the delegation request is denied. Advantageously, this hampers potential replay attacks undertaken by a malicious node.

Similar to the embodiment of Figure 3, the solution is designed to work in scenarios where multiple organizational entities (referred to as nodes) are involved in the API Invocation chain, where some of these organizational entities might not be known (and hence not trustable) either to the enterprise customer 10 or the CSP 12.

Using this solution, the CSP 12 is also able to provide a complete audit trail with proofs of entities involved in the chain and associated valid consent for each next-hop node in the API invocation chain. This is typically a requirement in regulatory structures such as GDPR.

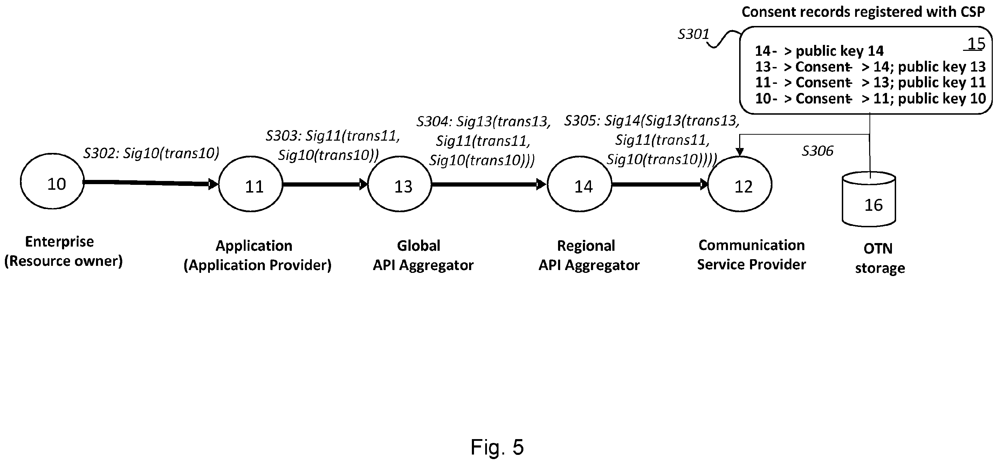

Figure 5 illustrates an alternative to the embodiment of Figure 4, where the nodes in the chain add a generated one-time number to the signed one-time number received from the immediately preceding node and applies a digital signature to the resulting message. While it would be possible to use sign a more general-type message like in the embodiment of Figure 3, the message in the embodiment described with reference to Figure 5 will comprise a generated one-time number, as in the embodiment described with reference to Figure 4.

In other words, like in Figure 4, the enterprise 10 generates a one-time number trans10, signs the generated one-time number resulting in Sig10(trans10) and then sends the signed one-time number in step S302 to the first application 11.

Thereafter, in step S303, the first application 11 generates a one-time number trans11 and adds the number to the signed message received from the enterprise, resulting in message trans11, Sigio(transio) and thereafter applies its digital signature to the resulting message: Sig11(trans11, Sigio(trans10)) before sending the signed resulting message to the second application 13.

The corresponding procedure is performed by the second application 13 (and optionally the third application 14 provides a signature), and the message reaching the CSP 12 in step S305 will thus consist of Sig14(Sig13(trans13, Sig11(trans11, Sig10(trans10)))).

Similar to the embodiment of Figure 4, the CSP 12 performs validation of the received digital signatures in step S306 by using the public key registered in the registration storage 15 in step S301 for each node to validate the provided digital signatures in step S306.

Thus, the CSP 12 will use the public key of each node preregistered in step S301 and held in registration storage 15 to verify the digital signature applied using the corresponding private key at each node.

In this embodiment, the CSP 12 would typically start by in step S306 by verifying the last applied digital signature provided by the third application 14, Sig14, before proceeding to verifying the next-last applied digital signature provided by the second application 13 and that the one time number trans13 of the second application 13 has not been used before (i.e. that trans13 is not in the OTN storage 16 for the second application 13), thereby advantageously hampering any replay attacks.

This is performed by the CSP 12 in step S306 for each node in the chain and if all four signature Sig10, Sig11, Sig13 and Sig14 are valid and consent is indicated for each node in line with the preregistration of step S301, API invocation is allowed and the delegation of access consent for the enterprise 10 via first and second applications 11, 13 to the third application 14 is successful.

As is understood, all the API invocation interactions, starting from the enterprise 10, over the application provider 11 and the multiple aggregators 13, 14 are basically application-to-application interactions without any direct human interaction triggered API invocation.

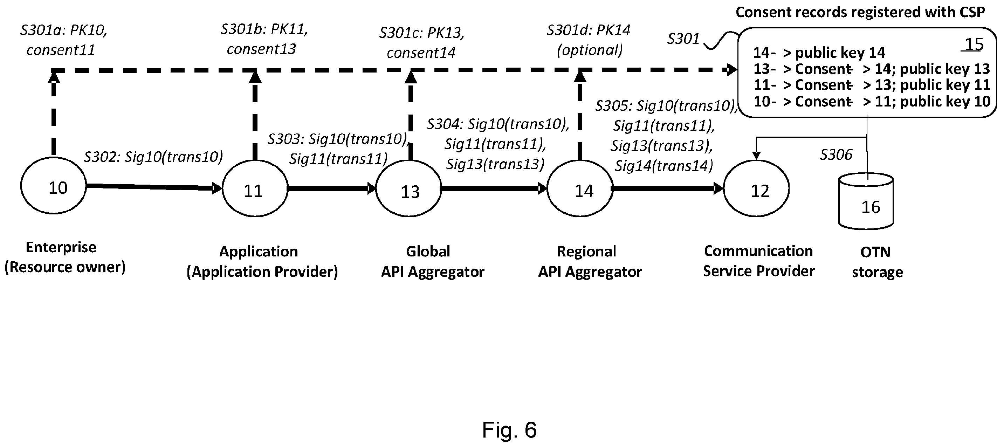

Figure 6 illustrates the chain validation scheme of the embodiment of Figure 4 with the addition that registration of each node with the registration storage 15 of CSP 12 further is illustrated. Hence, steps 302-306 already described with reference to Figure 4 will not be described again.

The registration of public keys for each node in the chain and consent of an immediately following node as previously described with reference to step S301 thus comprises, as indicated with the dotted arrow:
- S301a: the enterprise 10 registers its public key PK10 along with an explicit consent that the immediately following node, i.e. the first application 11, may act on behalf of the enterprise 10;
- S301b: the first application 11 registers its public key PK11 along with an explicit consent that the immediately following node, i.e. the second application 13, may act on behalf of the first application 11;
- S301c: the second application 13 registers its public key PK13 along with an explicit consent that the immediately following node, i.e. the third application 14, may act on behalf of the second application 13; and
- S301d: the third application 14 optionally registers its public key PK14.

Further, with reference to Figure 6, the CSP 12 may provide the following services, as has been previously described:
1. Network API service - This service exposes the CSP's network / system capabilities externally. This service encapsulates resources owned by the enterprise 10 (or enterprise customers/partners). The APIs exposed by this service is used to manage these resources. Access to these APIs can happen directly by the enterprise 10 or customers/partners or indirectly via intermediate nodes such as application providers 11 and/or API aggregators 13, 14. The service is capable of detecting whether the access scenario is direct or indirect and understand if consents are required.
2. Authentication & Authorization Service - This service authenticates and authorizes direct clients of the CSP's API. If the call comes directly from the enterprise 10 or enterprise customer/partner, the service validates the enterprise 10 or customer/partner based on presented credentials. These credentials are maintained in the CSP's authentication and authorization service. In case the API invocation is being undertaken over a chain, this service can only authenticate and authorize the last node in the API invocation chain (i.e. the third application 14), which is directly invoking the CSP's APIs.
3. Consent Registration & Revocation service - This service is responsible for registering, in the registration storage 15, the consents from a node to another node which can act on its behalf. The type of consents can be a "resource consent" from the resource owner as well as "API Invocation Consent" from the intermediaries involved in the chain. This service is also responsible to register the public keys to be used by nodes 10, 11, 13 by which the CSP 12 can validate their digital signatures included in a transaction. Each node 10, 11, 13 in the API invocation chain except the last intermediate node 14 has to explicitly register itself with this service which includes the public key as well as the consents they are providing to other nodes.
4. Consent evaluation service - This is the service which is called by the network API service to validate the transaction chain and consents for each node in the chain. It provides the decision if the access is to be allowed or not. In addition, it may log all the evaluation for auditing purposes.

In the flow of Figure 6, the enterprise 10 typically registers first as an enterprise customer and attains the required connectivity services (e.g., SIM cards, mobile numbers, basic subscription etc.) from the CSP 12 and is provided a unique customer identification number which it typically have to use for any API call to manage their account.

Similarly, the regional API aggregator 14 also registers itself as direct partner of the CSP 12 to externally act as an API aggregator for the CSP 12.

The global API aggregator 13 is asked by the regional API aggregator 14 to register its consents and public key with the CSP 12 since that will be required to validate the chain at the time of API invocation (as discussed in detail hereinabove). Since the global API aggregator 13 may make use of the regional API aggregator 14 to have integrations with local CSPs of that region (target CSPs of any possible API invocation), the global API aggregator 13 may be asked to register their consents with each of the local CSPs handled by the regional API aggregator 14. During the API invocation, the target CSP 12 will be indicated by the enterprise 10 to allow the global API aggregator 13 to select the appropriate regional API aggregator 14.

The application provider 11 may then be asked by the global API aggregator 13 to register its consents and public key with the CSP 12 since that will be required to validate the chain at the time of API invocation, and the enterprise 10 is also asked by the application provider 11 to register its public key and consent for the application provider 11 to act on its behalf. Once the registration is complete, API invocation may commence.

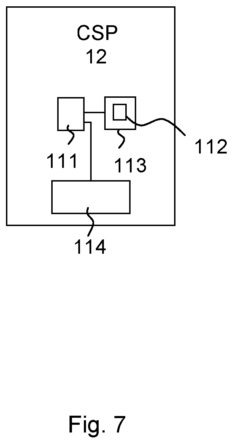

Figure 7 illustrates a node 12, such as a CSP, configured to validate delegated consent in a chain of nodes according to an embodiment, where the steps of the method performed by the node 12 in practice are performed by a processing unit 111 embodied in the form of one or more microprocessors arranged to execute a computer program 112 downloaded to a storage medium 113 associated with the microprocessor, such as a Random Access Memory (RAM), a Flash memory or a hard disk drive. The processing unit 111 is arranged to cause the node 12 to carry out the method according to embodiments when the appropriate computer program 112 comprising computer-executable instructions is downloaded to the storage medium 113 and executed by the processing unit 111. The storage medium 113 may also be a computer program product comprising the computer program 112. Alternatively, the computer program 112 may be transferred to the storage medium 113 by means of a suitable computer program product, such as a Digital Versatile Disc (DVD) or a memory stick. As a further alternative, the computer program 112 may be downloaded to the storage medium 113 over a network. The processing unit 111 may alternatively be embodied in the form of a digital signal processor (DSP), an application specific integrated circuit (ASIC), a field-programmable gate array (FPGA), a complex programmable logic device (CPLD), etc. The node 12 further comprises a communication interface 114 (wired and/or wireless) over which the node 12 is configured to transmit and receive data.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

## Claims

1. A method of validating delegated consent in a chain of nodes (10-14) comprising a first node (10), a plurality of intermediate nodes (11, 13, 14) and a validating node (12), the first node (10) being configured to delegate consent to perform an action on behalf of the first node (10) to a last node (14) of the plurality of intermediate nodes, which delegated consent is validated by the validating node (12) in the chain following the last intermediate node (14) for the delegation of consent to the last intermediate node (14) to be allowed, comprising:
receiving (S305), at the validating node (12) from the last intermediate node (14), a digitally signed message of each preceding node (10, 11, 13) sent to an immediately following node (11, 13, 14) in the chain; and
validating (S306), at the validating node (12), each provided digital signature by utilizing a preregistered (S301) public key of each node (10, 11, 13, 14) and that the indication of each node (10, 11, 13, 14) that an immediately following node in the chain is given consent to perform said action has been preregistered (S301), wherein the delegation of consent along the chain to the last intermediate node (14) to perform said action is allowed.

2. The method of claim 1, the receiving (S305) comprising receiving a separate digitally signed message of each node (10, 11, 13).

3. The method of claim 2, the receiving (S305) comprising receiving a sequence of digitally signed messages, wherein to each signed message an immediately following node (11, 13) has provided its digital signature.

4. The method of any one of the preceding claims, the validating (S306) comprising processing each digital signature with a public key corresponding to a private key utilized to apply the digital signature.

5. The method of any one of the preceding claims, the digitally signed message of each node (10, 11, 13) comprising a generated one-time number, wherein the validating (S306) further comprises:
verifying that the received one-time number of each node has not been previously used in a signed message of said each node.

6. The method of claim 6, the validating (S306) further comprises storing each received one-time number.

7. The method of any one of the preceding claims, further comprising:
registering (S301a-c), for said each preceding node (10, 11, 13), a public key and the consent given to the immediately following node (11, 13, 14).

8. The method of claim 7, further comprising:
registering (S301d) a public key for said last intermediate node (14).

9. The method of claim 8, wherein the validating (S306) further comprises validating a received (S305) digital signature of said last intermediate node (14) utilizing its registered (S301d) public key.

10. The method of claim 9, the receiving (S305) further comprising receiving a digitally signed one-time number of said last intermediate node (14) wherein the validating (S306) further comprises verifying that the received one-time number of said last intermediate node (14) has not been previously used in a signed message of said last intermediate node (14).

11. A computer program (112) comprising computer-executable instructions for causing a validating node (12) to perform steps recited in any one of claims 1-10 when the computer-executable instructions are executed on a processing unit (111) included in the validating node (12).

12. A computer program product comprising a computer readable medium (113), the computer readable medium having the computer program (112) according to claim 11 embodied thereon.

13. A validating node (12) configured to validate delegated consent in a chain of nodes (10-14) comprising a first node (10), a plurality of intermediate nodes (11, 13, 14) and the validating node (12), the first node (10) being configured to delegate consent to perform an action on behalf of the first node (10) to a last node (14) of the plurality of intermediate nodes, which delegated consent is validated by the validating node (12) in the chain following the last intermediate node (14) for the delegation of consent to the last intermediate node (14) to be allowed, the validating node (12) comprising a processing unit (111) and a memory (113), said memory containing instructions (112) executable by said processing unit (111), whereby the validating node (12) is operative to:
receive, from the last intermediate node (14), a digitally signed message of each preceding node (10, 11, 13) sent to an immediately following node (11, 13, 14) in the chain; and
validate each provided digital signature by utilizing a preregistered public key of each node (10, 11, 13, 14) and that the indication of each node (10, 11, 13, 14) that an immediately following node in the chain is given consent to perform said action has been preregistered, wherein the delegation of consent along the chain to the last intermediate node (14) to perform said action is allowed.

14. The validating node (12) of claim 13, further being operative to, when receiving a digitally signed message of each preceding node (10, 11, 13), receiving a separate digitally signed message of each node (10, 11, 13).

15. The validating node (12) of claim 14, further being operative to, when receiving a digitally signed message of each preceding node (10, 11, 13), receiving a sequence of digitally signed messages, wherein to each signed message an immediately following node (11, 13) has provided its digital signature.

16. The validating node (12) of any one of claims 13-15, further being operative to, when validating each provided digital signature, processing each digital signature with a public key corresponding to a private key utilized to apply the digital signature.

17. The validating node (12) of any one of claims 13-16, the digitally signed message of each node (10, 11, 13) comprising a generated one-time number, the validating node (12) further being operative to, when validating each provided digital signature: verify that the received one-time number of each node has not been previously used in a signed message of said each node.

## Patentansprüche

1. Verfahren zur Validierung einer delegierten Zustimmung in einer Kette von Knoten (10-14), umfassend einen ersten Knoten (10), eine Vielzahl von Zwischenknoten (11, 13, 14) und einen Validierungsknoten (12), wobei der erste Knoten (10) konfiguriert ist, um die Zustimmung zur Durchführung einer Aktion im Namen des ersten Knotens (10) an einen letzten Knoten (14) der Vielzahl von Zwischenknoten zu delegieren, wobei die delegierte Zustimmung durch den validierenden Knoten (12) in der Kette, die dem letzten Zwischenknoten (14) folgt, validiert wird, um die Delegation der Zustimmung an den letzten Zwischenknoten (14) zu erlauben, umfassend:
Empfangen (S305), an dem Validierungsknoten (12) von dem letzten Zwischenknoten (14), einer digital signierten Nachricht von jedem vorangehenden Knoten (10, 11, 13), die an einen unmittelbar folgenden Knoten (11, 13, 14) in der Kette gesendet wurde; und
Validieren (S306), an dem Validierungsknoten (12), jeder bereitgestellten digitalen Signatur durch Verwenden eines vorregistrierten (S301) öffentlichen Schlüssels jedes Knotens (10, 11, 13, 14) und dass die Anzeige jedes Knotens (10, 11, 13, 14), dass einem unmittelbar folgenden Knoten in der Kette die Zustimmung erteilt wird, die Aktion durchzuführen, vorregistriert (S301) wurde, wobei die Delegation der Zustimmung entlang der Kette an den letzten Zwischenknoten (14), die Aktion durchzuführen, erlaubt ist.

2. Verfahren nach Anspruch 1, wobei das Empfangen (S305) das Empfangen einer separaten digital signierten Nachricht von jedem Knoten (10, 11, 13) umfasst.

3. Verfahren nach Anspruch 2, wobei das Empfangen (S305) das Empfangen einer Folge von digital signierten Nachrichten umfasst, wobei zu jeder signierten Nachricht ein unmittelbar folgender Knoten (11, 13) seine digitale Signatur bereitgestellt hat.

4. Verfahren nach einem der vorstehenden Ansprüche, wobei die Validierung (S306) das Verarbeiten jeder digitalen Signatur mit einem öffentlichen Schlüssel umfasst, der einem privaten Schlüssel entspricht, der zum Anwenden der digitalen Signatur verwendet wird.

5. Verfahren nach einem der vorstehenden Ansprüche, wobei die digital signierte Nachricht jedes Knotens (10, 11, 13) eine generierte einmalige Nummer umfasst, wobei die Validierung (S306) weiter umfasst:
Verifizieren, dass die empfangene einmalige Nummer jedes Knotens nicht zuvor in einer signierten Nachricht des jeweiligen Knotens verwendet wurde.

6. Verfahren nach Anspruch 6, wobei die Validierung (S306) weiter das Speichern jeder empfangenen einmaligen Nummer umfasst.

7. Verfahren nach einem der vorstehenden Ansprüche, weiter umfassend:
Registrieren (S301a-c), für jeden vorangehenden Knoten (10, 11, 13), eines öffentlichen Schlüssels und der Zustimmung, die dem unmittelbar folgenden Knoten (11, 13, 14) erteilt wurde.

8. Verfahren nach Anspruch 7, weiter umfassend:
Registrieren (S301d) eines öffentlichen Schlüssels für den letzten Zwischenknoten (14).

9. Verfahren nach Anspruch 8, wobei das Validieren (S306) weiter das Validieren einer empfangenen (S305) digitalen Signatur des letzten Zwischenknotens (14) unter Verwendung seines registrierten (S301d) öffentlichen Schlüssels umfasst.

10. Verfahren nach Anspruch 9, wobei das Empfangen (S305) weiter das Empfangen einer digital signierten einmaligen Nummer des letzten Zwischenknotens (14) umfasst, wobei das Validieren (S306) weiter das Verifizieren umfasst, dass die empfangene einmalige Nummer des letzten Zwischenknotens (14) nicht vorher in einer signierten Nachricht des letzten Zwischenknotens (14) verwendet worden ist.

11. Computerprogramm (112), das computerausführbare Anweisungen umfasst, um einen Validierungsknoten (12) zu veranlassen, die in einem der Ansprüche 1-10 aufgeführten Schritte auszuführen, wenn die computerausführbaren Anweisungen auf einer in dem Validierungsknoten (12) eingeschlossenen Verarbeitungseinheit (111) ausgeführt werden.

12. Computerprogrammprodukt, das ein computerlesbares Medium (113) umfasst, wobei das computerlesbare Medium das Computerprogramm (112) nach Anspruch 11 darauf verkörpert aufweist.

13. Validierungsknoten (12), der konfiguriert ist, um eine delegierte Zustimmung in einer Kette von Knoten (10-14) zu validieren, die einen ersten Knoten (10), eine Vielzahl von Zwischenknoten (11, 13, 14) und den Validierungsknoten (12) umfasst, wobei der erste Knoten (10) konfiguriert ist, um die Zustimmung zur Durchführung einer Aktion im Namen des ersten Knotens (10) an einen letzten Knoten (14) der Vielzahl von Zwischenknoten zu delegieren, wobei die delegierte Zustimmung durch den Validierungsknoten (12) in der Kette nach dem letzten Zwischenknoten (14) validiert wird, um die Delegation der Zustimmung an den letzten Zwischenknoten (14) zu erlauben, wobei der Validierungsknoten (12) eine Verarbeitungseinheit (111) und einen Speicher (113) umfasst, wobei der Speicher Anweisungen (112) enthält, die durch die Verarbeitungseinheit (111) ausführbar sind, wodurch der Validierungsknoten (12) betriebsfähig ist zum:
Empfangen, vom letzten Zwischenknoten (14), einer digital signierten Nachricht von jedem vorangehenden Knoten (10, 11, 13), die an einen unmittelbar folgenden Knoten (11, 13, 14) in der Kette gesendet wurde; und
Validieren jeder bereitgestellten digitalen Signatur durch Verwenden eines vorregistrierten öffentlichen Schlüssels jedes Knotens (10, 11, 13, 14) und dass die Anzeige jedes Knotens (10, 11, 13, 14), dass einem unmittelbar folgenden Knoten in der Kette die Zustimmung erteilt wird, die Aktion durchzuführen, vorregistriert wurde, wobei die Delegation der Zustimmung entlang der Kette an den letzten Zwischenknoten (14), die Aktion durchzuführen, erlaubt ist.

14. Validierungsknoten (12) nach Anspruch 13, der weiter betriebsfähig ist, um beim Empfangen einer digital signierten Nachricht von jedem vorhergehenden Knoten (10, 11, 13) eine separate digital signierte Nachricht von jedem Knoten (10, 11, 13) zu empfangen.

15. Validierungsknoten (12) nach Anspruch 14, der weiter betriebsfähig ist, um beim Empfangen einer digital signierten Nachricht jedes vorhergehenden Knotens (10, 11, 13) eine Folge von digital signierten Nachrichten zu empfangen, wobei zu jeder signierten Nachricht ein unmittelbar folgender Knoten (11, 13) seine digitale Signatur bereitgestellt hat.

16. Validierungsknoten (12) nach einem der Ansprüche 13-15, der weiter betriebsfähig ist, um beim Validieren jeder bereitgestellten digitalen Signatur jede digitale Signatur mit einem öffentlichen Schlüssel zu verarbeiten, der einem privaten Schlüssel entspricht, der verwendet wird, um die digitale Signatur anzuwenden.

17. Validierungsknoten (12) nach einem der Ansprüche 13-16, wobei die digital signierte Nachricht jedes Knotens (10, 11, 13) eine erzeugte einmalige Nummer umfasst, wobei der Validierungsknoten (12) weiter betriebsfähig ist, um beim Validieren jeder bereitgestellten digitalen Signatur: zu verifizieren, dass die empfangene einmalige Nummer jedes Knotens nicht zuvor in einer signierten Nachricht jedes Knotens verwendet worden ist.

## Revendications

1. Procédé de validation de consentement délégué dans une chaîne de nœuds (10-14) comprenant un premier nœud (10), une pluralité de nœuds intermédiaires (11, 13, 14) et un nœud de validation (12), le premier nœud (10) étant configuré pour déléguer le consentement à effectuer une action pour le compte du premier nœud (10) à un dernier nœud (14) de la pluralité de nœuds intermédiaires, lequel consentement délégué est validé par le nœud de validation (12) dans la chaîne suivant le dernier nœud intermédiaire (14) pour que la délégation du consentement au dernier nœud intermédiaire (14) soit autorisée, comprenant :
la réception (S305), au niveau du nœud de validation (12), en provenance du dernier nœud intermédiaire (14), d'un message signé numériquement de chaque nœud précédent (10, 11, 13) envoyé à un nœud immédiatement suivant (11, 13, 14) dans la chaîne ; et
la validation (S306), au niveau du nœud de validation (12), de chaque signature numérique fournie en utilisant une clé publique préenregistrée (S301) de chaque nœud (10, 11, 13, 14) et que l'indication de chaque nœud (10, 11, 13, 14) selon laquelle un nœud immédiatement suivant dans la chaîne est autorisé à effectuer ladite action a été préenregistrée (S301), dans lequel la délégation de consentement le long de la chaîne au dernier nœud intermédiaire (14) pour effectuer ladite action est autorisée.

2. Procédé selon la revendication 1, la réception (S305) comprenant la réception d'un message signé numériquement distinct de chaque nœud (10, 11, 13).

3. Procédé selon la revendication 2, la réception (S305) comprenant la réception d'une séquence de messages signés numériquement, dans lequel à chaque message signé, un nœud immédiatement suivant (11, 13) a fourni sa signature numérique.

4. Procédé selon l'une quelconque des revendications précédentes, la validation (S306) comprenant le traitement de chaque signature numérique avec une clé publique correspondant à une clé privée utilisée pour appliquer la signature numérique.

5. Procédé selon l'une quelconque des revendications précédentes, le message signé numériquement de chaque nœud (10, 11, 13) comprenant un numéro unique généré, dans lequel la validation (S306) comprend en outre :
la vérification que le numéro unique reçu de chaque nœud n'a pas été utilisé précédemment dans un message signé dudit nœud.

6. Procédé selon la revendication 6, la validation (S306) comprend en outre le stockage de chaque numéro unique reçu.

7. Procédé selon l'une quelconque des revendications précédentes, comprenant en outre :
l'enregistrement (S301a-c), pour chaque dit nœud précédent (10, 11, 13), d'une clé publique et du consentement donné au nœud suivant (11, 13, 14).

8. Procédé selon la revendication 7, comprenant en outre :
l'enregistrement (S301d) d'une clé publique pour ledit dernier nœud intermédiaire (14).

9. Procédé selon la revendication 8, dans lequel la validation (S306) comprend en outre la validation d'une signature numérique reçue (S305) dudit dernier nœud intermédiaire (14) en utilisant sa clé publique enregistrée (S301d).

10. Procédé selon la revendication 9, la réception (S305) comprenant en outre la réception d'un numéro unique signé numériquement dudit dernier nœud intermédiaire (14), dans lequel la validation (S306) comprend en outre la vérification que le numéro unique reçu dudit dernier nœud intermédiaire (14) n'a pas été précédemment utilisé dans un message signé dudit dernier nœud intermédiaire (14).

11. Programme informatique (112) comprenant des instructions exécutables par ordinateur pour amener un nœud de validation (12) à effectuer les étapes citées dans l'une quelconque des revendications 1-10 lorsque les instructions exécutables par ordinateur sont exécutées sur une unité de traitement (111) incluse dans le nœud de validation (12).

12. Produit de programme informatique comprenant un support lisible par ordinateur (113), le support lisible par ordinateur présentant le programme informatique (112) selon la revendication 11 incorporé dans celui-ci.

13. Nœud de validation (12) configuré pour valider le consentement délégué dans une chaîne de nœuds (10-14) comprenant un premier nœud (10), une pluralité de nœuds intermédiaires (11, 13, 14) et le nœud de validation (12), le premier nœud (10) étant configuré pour déléguer le consentement à effectuer une action pour le compte du premier nœud (10) à un dernier nœud (14) de la pluralité de nœuds intermédiaires, lequel consentement délégué est validé par le nœud de validation (12) dans la chaîne suivant le dernier nœud intermédiaire (14) pour que la délégation de consentement au dernier nœud intermédiaire (14) soit autorisée, le nœud de validation (12) comprenant une unité de traitement (111) et une mémoire (113), ladite mémoire contenant des instructions (112) exécutables par ladite unité de traitement (111), moyennant quoi le nœud de validation (12) est opérationnel pour :
recevoir, du dernier nœud intermédiaire (14), un message signé numériquement de chaque nœud précédent (10, 11, 13) envoyé à un nœud immédiatement suivant (11, 13, 14) dans la chaîne ; et
valider chaque signature numérique fournie en utilisant une clé publique préenregistrée de chaque nœud (10, 11, 13, 14) et que l'indication de chaque nœud (10, 11, 13, 14) selon laquelle un nœud immédiatement suivant dans la chaîne est autorisé à effectuer ladite action a été préenregistrée, dans lequel la délégation de consentement le long de la chaîne au dernier nœud intermédiaire (14) pour effectuer ladite action est autorisée.

14. Nœud de validation (12) selon la revendication 13, étant en outre opérationnel, lors de la réception d'un message signé numériquement de chaque nœud précédent (10, 11, 13), pour recevoir un message signé numériquement distinct de chaque nœud (10, 11, 13).

15. Nœud de validation (12) selon la revendication 14, étant en outre opérationnel, lors de la réception d'un message signé numériquement de chaque nœud précédent (10, 11, 13), pour recevoir une séquence de messages signés numériquement, dans lequel à chaque message signé, un nœud immédiatement suivant (11, 13) a fourni sa signature numérique.

16. Nœud de validation (12) selon l'une quelconque des revendications 13-15, étant en outre opérationnel, lors de la validation de chaque signature numérique fournie, pour traiter chaque signature numérique avec une clé publique correspondant à une clé privée utilisée pour appliquer la signature numérique.

17. Nœud de validation (12) selon l'une quelconque des revendications 13-16, le message signé numériquement de chaque nœud (10, 11, 13) comprenant un numéro unique généré, le nœud de validation (12) étant en outre opérationnel, lors de la validation de chaque signature numérique fournie, pour : vérifier que le numéro unique reçu de chaque nœud n'a pas été précédemment utilisé dans un message signé de chaque dit nœud.
